# EUROPEAN PATENT APPLICATION

(11) **EP 1 850 117 A1**
(43) Date of publication of application: **31.10.2007**
(21) Application number: 06112964.9
(22) Date of filing: 24.04.2006
(51) Int. Cl.: G01N 21/64, G01N 21/35

(54) **Optical analyser**

(71) Applicant: FOSS Analytical A/S, 3400 Hilleroed (DK)
(72) Inventor: Broe Bendsten, Anders, DK-2840, Holte (DK)

(57) **Abstract**

An optical analyser (2) is provided comprising a fluorescence detector (12) for detecting optical fluorescence from a sample usable in the generation of representative fluorescence data (14) and an optical spectrophotometer (16) for detecting optical absorption by a sample, preferably the same sample, usable in the generation of representative absorption data (20). A data processor (24) is configured to receive the data (14; 20) and operates to correlate the data (14; 20) with one or both of a qualitative and a quantitative indication of a property of interest of the material using a predictive model established from a combination of both fluorescence and absorption data.

## Description

The present invention relates to an optical analyser for the determination of one or both of a qualitative and a quantitative indication of a property of interest of a material being analysed.

In the context of the present invention "optical" shall be taken to mean any or all of that part of the electromagnetic spectrum extending from and including ultraviolet radiation to and including far infra-red radiation. Related terms shall be construed accordingly.

It is known that certain components of materials, particularly biological materials, can be made to exhibit characteristic fluorescence and that properties, here compositional properties, of materials can be determined by monitoring these characteristic fluorescence "fingerprints". In particular it is known that the amount and the types of collagens in meat may be determined from fluorescence measurements. The hydroxyproline in the collagen may be made to auto-fluoresce with optical emissions around 400 - 510 nm by using an optical excitation wavelength of around 350 - 390 nm. The amino acids tryptophane, thyrosine and phenylalanine in the regular meat proteins are also known to auto-fluoresce with optical emissions around 350 nm and whilst fat in meat and other food products, such as edible oils, nuts and cereals, shows no fluorescence in itself, oxidation products of the fat are known to exhibit auto-fluorescence. Furthermore, pre-harvest sprouting and aspergillus flavus growth on grain may be detected by fluorescence, the latter by the auto-fluorescence of kojic acid after excitation with ultraviolet optical radiation in the region of 365nm and is typically employed to screen for potential alphatoxin presence in grain.

Additionally, it is known that certain components have spectral fingerprints that mask or distort the spectral fingerprints of the components of interest of the material that may be present in the material in different concentrations. This is particularly problematical with respect to fluorescence signals in which spectral fingerprints of components present in the material in relatively large amounts interfere with the fluorescence signal from other components that are present in much smaller amounts and may mask or distort the fluorescence fingerprints of these other components.

It is further known that components which exhibit fluorescence or, in some cases, other components of the material which indicate the presence of the same exhibit characteristic absorption of optical energy. Properties of the material, such as chemical (compositional) or physical properties,can therefore be determined using optical absorption spectroscopy techniques to monitor these characteristic absorption spectral "fingerprints".

According to the present invention there is provided an optical analyser as described in and characterised by the present Claim 1. By employing the combination of both fluorescence data and optical absorption data from a material under investigation in the determination of related properties of the material, be it compositional or physical, then the determination can be better established than by using either the fluorescence or the absorption data alone.

Advantageously, the effects of a component on one or other of the fluorescence data and the absorption data, particularly the fluorescence data, may be compensated for using a quantitative determination of that same component obtained from the analysis of the other of the absorption data and the fluorescence data, particularly the absorption data.

Usefully, the first and the second measurement stations may be collocated at a single measurement station. This facilitates the analysis of the same sample of the material and allows the correlation of data from the same portion of the material.

Alternatively, the first and the second measurement stations are physically separated and capable of receiving different samples of the same material. This permits the separate chemical and/or physical treatment of samples dependent on the different measurements to be performed and also allows the data to be generated substantially in parallel and preferably contemporaneously, which reduces the time necessary for an analysis .

These and other advantages will elaborated in the following description of an exemplary embodiment of the invention made with reference to the drawings of the accompanying figure, of which:
Fig. 1 shows a schematic representation of an embodiment of the analyser according to the present invention;
Fig. 2 shows a schematic representation of a further embodiment of the analyser according to the present invention; and
Fig. 3 shows a method of conducting an analysis of a material employing the analyser of Fig. 1 or Fig. 2.

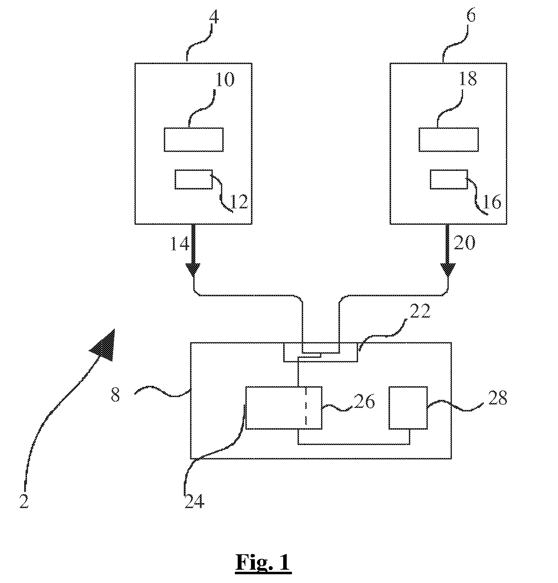

Considering now Fig. 1, an exemplary optical analyser 2 is illustrated as comprising three functional elements: a conventional fluorescence detection element 4; a conventional optical spectrophotometric element6; and a data processing element 8.

The fluorescence detection element 4 is here provided with a first measurement station 10 at which a sample of material, say meat or other food product, is received for analysis. A fluorescence detector 12 is disposed in optical communication with this first measurement station 10 to stimulate and detect fluorescence from the sample. Representative fluorescence data is generated from the detected fluorescence and provided as an output 14 of the fluorescence detection element 4.

The optical spectrophotometric element 6 here comprises a spectrophotometer 1 6 disposed in optical communication with a second measurement station 1 8 at which a sample of the same material, for example the same sample, as received at the first measurement station 10 is received for analysis. The spectrophotometer 16 may, for example, be of the known filter or grating monochromator type or of the known Fourier Transform spectrometer type or generally any type of spectrophotometer adapted to detect absorption of appropriate optical energy, typically in the visible and/or near infra red optical region, by the sample received at the second measurement station 18. Representative absorption data is generated from the detected absorption and provided as an output 20 of the optical spectrophotometric element 6.

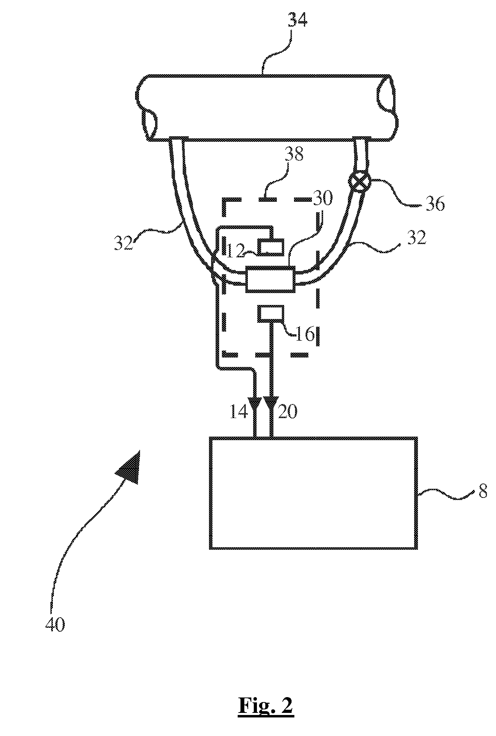

According to an alternative embodiment, which may with advantage be employed in the detection of auto-fluorescence, the first measurement station 10 and the second measurement station 18 are collocated to provide a single measurement station 30 of an optical analyser 40. This is illustrated in Fig. 2 in which a component common with that embodiment of Fig. 1 is identified using the same reference numeral as used to identify that same component in Fig. 1. This single measurement station 30 facilitates the analysis of the same sample and in particular the same region of the same sample. As is illustrated in the exemplary embodiment of Fig. 2, the measurement station 30 may be located in a bypass flow line 32 of a main flow conduit 34 for the material to be analysed. A flow regulator 36 is here provided to control the flow of material past the measurement station 30. If required the flow regulator 36 may be operated to stop the flow during acquisition of fluorescence and/or absorption data.

In this present embodiment the fluorescence detection element 12 and the spectrophotometer 16 are provided within a common housing 38 and are each arranged for optical communication with the sample of material at the sample station 30. In an alternative embodiment the housing 38, containing the fluorescence detection element 12, the spectrophotometer 16 and the single measurement station 30, such as may be formed as a removable sample cuvette, is provided as a stand alone unit.

Considering again Fig. 1, it is envisaged that one or both of the first and the second measurement stations 10,18 may be disposed in-line or at-line in a food processing line or may be contained within an associated stand alone fluorescence detection element 4 and/or a optical spectrophotometric element 6.

The data processing element 8 is, in the presently described embodiments illustrated in Fig.1 and Fig. 2, provided with a suitable interface unit 22 which couples the respective outputs 14,20 of the fluorescence detection element 4 and the optical spectrophotometric element 6 to a data processing unit 24. This coupling may for example be via wire, say to a locally located data processing element 8 or over a telecommunications network such as the Internet to say a remotely located data processing element 8. The data processing unit 24 is provided with an operable connection to a memory unit 26, which in the present embodiment is shown as being collocated with the data processing unit 24 but which could also be located remote of the same unit 2 4. An output unit 28, such as may be realised by a display unit or printer, is provided to generate a human discernable representation of the results of the data analysis performed by the data processing unit 24. Additionally or alternatively these results may be used in the process control in a material product production line, such as a food product production line.

The results, together with or without the 'raw data' of the outputs 14,20, can then be stored in the memory unit 26 for later retrieval and/or analysis. In an alternative embodiment the representative data of the outputs 14,20 can, for example be, stored directly in a memory unit 26 and the data analysis performed by a data processor 24, off line, at a later time.

According to the present invention the data processing unit 22 is configured, using known programming techniques, to correlate the data contained in the outputs 14,20 with one or both of a qualitative and a quantitative indication of a property of the material, here for example the presence of a component of interest in the material, using a predictive model established from a combination of both fluorescence and absorption data obtained from standard reference samples. This model may be stored in the memory unit 26 or may be generated by the data processing unit24 'on demand' using datafrom the standard reference samplesstored in the memory unit 26.

In an embodiment of the present invention the correlation involves employing the data from a one of the outputs 14,20 to determine the quantitative presence of a component and then to use this determination in a compensation of data from the other of the outputs 20,14 to correct for unwanted effects associated with that component on the data from that other output 20,14. In this embodiment data 20 from the optical absorption measurements may be used to predict an amount of a first component known to contribute to the detected fluorescence data to a degree which adversely affects a proper determination of a component of interest from that detected fluorescence data. Once this amount is known then the data processor 24 employs the predictive model in a manner to substantially compensate for the presence of that first component in the analysis of the fluorescence data in the quantitative or qualitative determination of the property, here the presence of the component of interest, of the material. In this way components of interest which contribute relative low levels of fluorescence can be better detected and the determination made more accurately.

The correlation of such optical data using such predictive models is generally known in the art and may be achieved for example using artificial neural networks or by using chemometric techniques, such as multivariate analysis, partial least squares analysis or other regression analysis. In any event the mathematical transformation of the data in the output signals 14,20 to a qualitative and/or a quantitative indication of the property of interest of the material is necessarily achieved using corresponding data obtained from reference samples of the same or substantially similar material in which the content of the component of interest has been established from other, direct analytical methods. Predictive models are then established giving an indirect indication of the property, in the present example, the component(s), of interest by linking it to the fluorescence and the absorption spectral fingerprints of the reference samples.

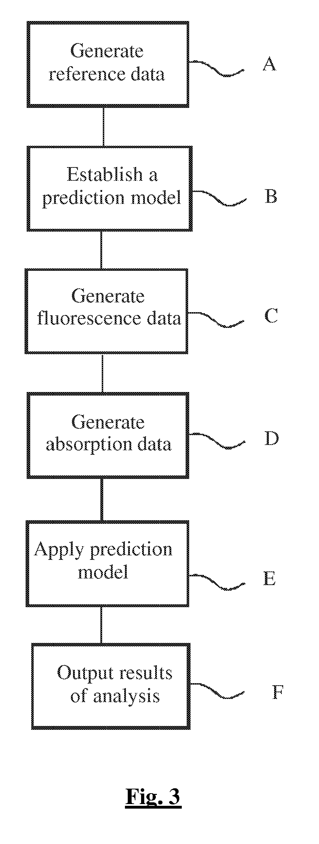

Fig. 3 illustrates a method of operation of the analyser according to the invention, as exemplified in Fig.1 or Fig. 2. Whilst the operational steps are illustrated by Fig. 3 to occur in a particular order it will be realised by the skilled person that the order may be varied, steps omitted, or steps performed in parallel without departing from the invention.

Initially, at step A, reference fluorescence and absorption data is generated from a plurality of samples of reference material using respectively the fluorescence detection element 4 and the optical spectrophotometric element 6 (or indeed the combined element 38) and is stored for later retrieval. The amounts of a component being monitored via fluorescence and absorption measurements are known in and varied between each of the reference samples. Where necessary a physical characteristic associated with the component being monitored is also known and stored indexed to the reference optical data.

At step B, the stored data is retrieved and predictive model generated which correlates the known amounts of components being monitored with optical features (or fingerprints) represented by both the stored fluorescence data and the stored absorption data together.

At steps C and D respectively the fluorescence detection element 4 and the optical spectrophotometric element 6 are operated to generate corresponding fluorescence data and absorption data representative of fluorescence from and optical absorption by an unknown material.

At step E, the data processing unit 24 accesses the prediction model and applies it to both the fluorescence data and to the absorption data in order to correlate the combined data with a compositional or physical characteristic (such as, without limitation: rancidity, bitterness, tenderness or hardness) of interest of the unknown material.

The result of this correlation is, at step F, provided to the output unit 26 where it is transformed into a human discernable form.

## Claims

1. An optical analyser (2; 40) **characterised in that** it comprise a fluorescence detector (12) for generating fluorescence data (14) from a sample of material received at a first measurement station (10; 30) of the analyser (2; 40) ; an optical spectro photometer (16) for generating optical absorption data (20) from a sample of the material received at a second measurement station (18; 30) of the analyser (2; 40); and a data processor(24) adapted to correlate the fluorescence data (14) and the absorption data (20) with one or both of a qualitative and a quantitative indication of a property of interest of the material using a predictive model established from a combination of both fluorescence and absorption data.

2. An optical analyser (40) as claimed in Claim 1 **characterised in that** the first measurement station (10) and the second measurement station (18) are collocated to provide a single measurement station (30).

3. An optical analyser (2) as claimed in Claim 1 **characterised in that** the first measurement station (10) and the second measurement station (18) are physically separate.

4. An optical analyser (2; 40) as claimed in any preceding claim **characterised in that** the data processor (24) is adapted to correlate the data with the indication by using the predictive model established to compensate for the effects of a first component on one or other of the fluorescence data (14) and the absorption data (20) by means of a quantitative determination indicative of an amount of that first component from an analysis of the other of the absorption data (20) or the fluorescence data (14).
